# EUROPÄISCHE PATENTSCHRIFT

(11) **EP 1 619 093 B1**
(45) Veröffentlichungstag und Bekanntmachung des Hinweises auf die Patenterteilung: **13.02.2013**
(21) Anmeldenummer: 05015726.2
(22) Anmeldetag: 20.07.2005
(51) Int. Cl.: B60R 25/00, G07C 9/00, E05B 49/00

(54) **Schliesssystem, insbesondere für ein Kraftfahrzeug**
Locking system, in particular for a motor vehicle.
Système de verrouillage, notamment pour véhicule à moteur

(30) Priorität: 21.07.2004 DE 102004035302
(43) Veröffentlichungstag der Anmeldung: 25.01.2006
(73) Patentinhaber: Marquardt GmbH, 78604 Rietheim-Weilheim (DE)
(72) Erfinder: Biselli, Lothar, 88637 Leipertingen (DE); Hipp, Uwe, 72514 Engelswies (DE); Mattes, Johannes, 78567 Fridlingen (DE); Weisser, Dietmar, 78532 Tuttlingen (DE); Maler, Ralf, 78606 Seltingen-Oberflacht (DE)
(74) Vertreter: Otten, Herbert

(56) Entgegenhaltungen:
- EP-A- 0 980 800
- DE-A1- 10 202 330
- DE-A1- 19 621 076
- DE-C1- 4 430 360

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradvarriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für elektromagnetische Signale. Im bestimmungsgemäßen Betrieb ist zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Für die erweiternden Keyless-Funktionalitäten genügt es, daß der Benutzer den Schlüssel mit sich führt. Um jedoch die jeweils gewünschte und/oder zulässige Keyless-Funktionalität auszulösen, ist es notwendig, daß das Schließsystem den jeweiligen Ort des Schlüssels feststellen kann. Aufgrund zeitlicher Änderungen sowie von Umwelteinflüssen besteht die Gefahr, daß die Genauigkeit der Ortsbestimmung für den Schlüssel nicht in allen Fällen ausreichend ist, was wiederum die Sicherheit des Schließsystems o. dgl. beeinträchtigt.

Ein Schließsystem mit Keyless-Funktionalität ist aus der EP 0 980 800 A2 bekannt. Das Schließsystem umfaßt eine im Kraftfahrzeug befindliche Sende- und Empfangseinheit mit Antennen und einen tragbaren Codegeber. Zur Authentikation des Codegebers wird ein Betriebssignal zwischen der Sende - und Empfangseinheit und dem Codegeber übertragen, wobei das Betriebssignal aus einem von der Sende- und Empfangseinheit gesendeten Fragesignal sowie einem vom Codegeber zurückgesandten Antwortsignal besteht. Das Fragesignal wird mehrfach mit geänderter Sendeleistung oder über verschiedene Antennen ausgesendet. Der Codegeber besitzt eine Meßeinrichtung zur Messung der Empfangsleistung für das Fragesignal. Der mittels der Meßeinrichtung ermittelte Wert für die Empfangsleistung wird dem Antwortsignal hinzugefügt. Zur Erhöhung der Diebstahlsicherheit wird das Antwortsignal im Hinblick auf die veränderte Empfangsleistung ausgewertet, da gleichbleibende Antwortsignale auf einen manipulieren Codegeber hindeuten. Eine Ortsbestimmung für den Codegeber erfolgt jedoch bei diesem Schließsystem nicht.

Des Weiteren ist es aus der DE 196 21 076 A1 bei einer einen Schwingkreis enthaltenden Vorrichtung zur Übertragung von Energie und Daten bekannt, zum Ausgleich von Bauteiltoleranzen, von Alterung oder von Temperatureinflüssen die Resonanzfrequenz des Schwingkreises durch phasenweises Hinzuschalten einer Abgleichimpedanz an die Erregerfrequenz anzupassen. Eine solche Vorrichtung zur Übertragung von Daten ist in einer Diebstahlschutzeinrichtung im Kraftfahrzeug verwendbar.

Schließlich ist in der DE 102 02 330 A1 ein Schließsystem mit Keyless-Funktionalität für ein Kraftfahrzeug beschrieben. Das Schließsystem umfaßt eine als Steuereinrichtung ausgebildete erste Einrichtung im Kraftfahrzeug und eine zugehörige, in der Art eines elektronischen Schlüssels ausgebildete zweite Einrichtung, wobei zwischen den beiden Einrichtungen elektromagnetische Signale übertragbar sind, um die Änderung des Zustands der ersten Einrichtung zu bewirken. Dabei sendet die erste Einrichtung ein Signal für die zugehörige zweite Einrichtung als Wecksignal, derart daß die zweite Einrichtung aus einem Ruhezustand mit verringertem Energiebedarf in einen aktivierten Zustand für den bestimmungsgemäßen Betrieb übergeführt wird. Nach Aussenden dieses Signals sendet die erste Einrichtung ein weiteres Signal als Bereichsabgrenzungssignal, derart daß die zugehörige zweite Einrichtung deren Standort in Bezug auf die erste Einrichtung am und/oder im Kraftfahrzeug bestimmen kann.

Der Erfindung liegt die Aufgabe zugrunde, die Funktionssicherheit des mit Keyless-Funktionalität ausgestatteten Schließsystems im Hinblick auf die Genauigkeit der Ortsbestimmung für den Schlüssel zu verbessern, insbesondere weitgehend homogene Feldverhältnisse für den Sender und/oder Empfänger über Zeit und Umwelteinflüsse zu gewährleisten.

Diese Aufgabe wird bei einem gattungsgemäßen Schließsystem durch die kennzeichnenden Merkmale des Anspruchs 1 gelöst.

Beim erfindungsgemäßen Schließsystem ist die Feldstärke für das Wecksignal und/oder für das Bereichsabgrenzungssignal des Senders in der ersten Einrichtung auf einen vorgebbaren Soll-Wert geregelt. Die Regelung erfolgt derart, beispielsweise durch Regelung der vom Sender abgegebenen Leistung, daß der Sender ein insbesondere zeitlich homogenes Feld erzeugt. Vorteilhafterweise bleibt dadurch bei sich verändernden Umwelteinflüssen oder sonstigen Änderungen die Feldstärke im gesamten Wirkungsbereich des Schließsystems unveränderlich, so daß eine exakte Funktion des Schließsystems in allen Fällen gewährleistet ist. Weitere Ausgestaltungen der Erfindung sind Gegenstand der Unteransprüche.

Um eine effektive Regelung der Feldstärke zu gewährleisten, wird zweckmäßigerweise der Ist-Wert für die Feldstärke ermittelt. Die Ermittlung des Ist-Wertes kann durch Messung der Leistung des Senders an der Antenne erfolgen. Hierfür eignet sich beispielsweise eine Spannungsmessung, eine Strommessung, eine Phasenmessung o. dgl. im Schwingkreis des Senders. Beispielsweise kann der Ist-Wert für die Feldstärke des Senders mittels einer Strom- und/oder Phasenmessung im Schwingkreis des Senders gemessen werden, und aufgrund dieser Messung die Ansteuerfrequenz des angeschlossenen Schwingkreises auf Resonanz geändert werden.

Die variable Ansteuerung der Antennen-Anregung erfolgt vor allem zur Regelung der Feldstärke und/oder Leistung des Senders. Sie kann jedoch auch zu anderen Zwecken vorgenommen werden, beispielsweise um eine schnelle Anpassung auf andere Fahrzeugvarianten über Änderung der Parameter, eine Eingrenzung der Weckreichweite für spezielle Funktionen und/oder eine Eingrenzung des Wirkbereichs zu erzielen. Zur variablen Ansteuerung geeignet ist eine Pulsweitenmodulation PWM und/oder eine Reduzierung der Antennenleistung mittels einer Veränderung der Ansteuerungsperiode, insbesondere um ein Vielfaches der Resonanzfrequenz, beispielsweise mit einer Dauer der Ansteuerungsperiode von der 1- bis 5-fachen Resenanzperiodendauer.

In einer Weiterbildung sendet die erste Einrichtung ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung am und/oder im Kraftfahrzeug bestimmen kann. Der Standort der zweiten Einrichtung in Bezug auf die erste Einrichtung am und/oder im Kraftfahrzeug wird anschließend mit einem vierten Signal als Rückantwortsignal von der zweiten zur ersten Einrichtung gesendet. Sind diese Signale erfolgreich übermittelt, so wird schließlich die Authentikation der zweiten Einrichtung mittels weiterer fünfter Signale als codierte Betriebssignale durchgeführt. Sind somit die für das Wecken sowie die Bereichsabgrenzung notwendigen Vorbedingungen nicht erfüllt, so wird die an sich aufwendige Authentikation gar nicht durchgeführt, womit eine effizientere Betriebsweise für das Schließsystem ermöglicht ist. Das der Authentikation dienende fünfte elektromagnetische Signal kann schließlich in einer die Diebstahlsicherheit erhöhenden bidircktionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizienz der Betriebsweise des Schließsystems möglich.

Zur Bestimmung des Standorts wertet die zweite Einrichtung die Feldsituation für die empfangenen Bercichsabgrenzungssignale zeitlich und/oder quantitativ aus. Dabei wird der Sender für das Bereichsabgrenzungssignal mit unterschiedlicher Leistung angesteuert, so daß weniger Sender als bei herkömmlichen Schließsystemen benötigt werden. In einfacher und kostengünstiger Weise ist hierzu weiterhin in der zweiten Einrichtung ein Mittel zur Messung der Feldstärke des von der ersten Einrichtung übertragenen Bereichsabgrenzungssignals angeordnet. Die Standortbestimmung kann dann anhand der gemessenen Intensitäten der Bereichsabgrenzungssignale erfolgen.

Zweckmäßigerweise ist das Mittel zur Messung der Feldstärke als ein integrierter Baustein ausgestaltet. Dieser Baustein erzeugt ein in funktioneller Abhängigkeit zur gemessenen Feldstärke stehendes sogenanntes RSSI(Radio Signal Strength Indicator)-Signal, das dann in einfacher Weise zur eigentlichen Standortbestimmung herangezogen werden kann. Besonders geeignet zur Weiterverarbeitung des RSSI-Signals ist ein Mikroprozessor, wobei es sich dabei um den in der zweiten Einrichtung für deren Betrieb bereits vorhandenen Mikroprozessor handeln kann. Das RSSI-Signal selbst kann beispielsweise in proportionaler oder logarithmischer Abhängigkeit zur gemessenen Feldstärke stehen.

Um eine einfache und schnelle Arbeitsweise für die Standortbestimmung zu gewährleisten, läßt sich ein Schwellwert in der zweiten Einrichtung festlegen. Dann können die aus den Bereichsabgrenzungssignalen erzeugten RSSI-Signale jeweils mit dem Schwellwert verglichen werden. Somit läßt sich dann mittels logischer, insbesondere boole'scher Verknüpfungen der Ergebnisse dieser Vergleiche der Standort bestimmen.

Besonders bevorzugt ist, für das Weck- und/oder das Bereichsabgrenzungssignal ein induktives Signal zu verwenden, indem die Trägerwelle für das erste Signal und/oder das dritte Signal und/oder Teilsignale des dritten Signals eine im induktiven, niederfrequenten (NF-)Bereich liegende Frequenz aufweist. Aufgrund der begrenzten Reichweite eines induktiven Signals läßt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz betragen.

Zweckmäßigerweise besitzt die erste Einrichtung zwei induktive Sender beziehungsweise als induktive Sender dienende Spulen und die zweite Einrichtung einen induktiven Empfänger. Ein induktiver Sender und/oder eine Spule ist dem Innenraum sowie ein weiterer induktiver Sender und/oder eine Spule ist dem Kofferraum des Kraftfahrzeugs zugeordnet. In kostengünstiger Anordnung ist folglich mit lediglich zwei Sendern eine Innnen-/Außen-Abgrenzung am Kraftfahrzeug ermöglicht. Wird zusätzlich eine Seitenerkennung für den Außenraum am Kraftfahrzeug gewünscht, so kann gegebenenfalls die erste Einrichtung einen weiteren, der fahrerseitigen Tür des Kraftfahrzeugs zugeordneten induktiven Sender beziehungsweise eine als induktiver Sender dienende Spule besitzen.

Zur Auslösung des Wecksignals bietet sich ein durch den Benutzer manuell betätigbarer Schalter und/oder Sensor, der beispielsweise als kapazitiv arbeitender Näherungssensor ausgestaltet sein kann, an. Der für die Zugangsberechtigung zum Kraftfahrzeug dienende, dem jeweiligen Sender zugeordnete Schalter bzw. Sensor ist beispielsweise im Türgriff, im Heckgriff o. dgl. des Kraftfahrzeugs angeordnet. Der Start/Stop-Schalter bzw. Sensor für die Fahrberechtigung des Kraftfahrzeugs ist beispielsweise am Gangwahlhebel, am Zündschloß, im Armaturenbrett oder in der Mittelkonsole angeordnet.

Die mit der Erfindung erzielten Vorteile bestehen insbesondere darin, daß die homogenen Felder eine exakte Innen- /Außenabgenzung für die zweite Einrichtung in Bezug auf das Kraftfahrzeug gestatten. Darüberhinaus bewirken die zeitlich konstanten Felder eine lediglich sehr geringe Lageabhängigkeit der zweiten Einrichtung. Die Ansteuerung der Antennen mittels Pulsweitenmodulation und/oder mittels Erhöhen der Anregungsperiodendaucr, insbesondere in ganzzahligen Vielfachen, ergibt eine hohe Dynamik. Das Weckfcld ist regelbar, beispielsweise um die zweite Einrichtung im Nahbereich zu wecken.

Weiterhin ist vorteilhaft, daß die Abgrenzungsfelder durch Parameter vorgegeben und auch verändert werden können. Dadurch ist in einfacher Art und Weise eine Anpassung des Schließsystems an andere Fahrzeugtypen bzw. Fahraeugvarianten, wie Kombi, Limousine, Van, Cabrio o. dgl., möglich.

Zur Bereichserkennung genügt auf einfache Weise die Bildung von Schnittmengen. Damit ist die Innenraumerkennung mit lediglich zwei Antennen möglich. Für die Kofferraumerkennung lassen sich wiederum dieselben zwei Antennen verwenden. Da zwei bis drei Antennen ausreichend sind, werden auch Antennen im Vergleich zum bisherigen System eingespart.

Mit Hilfe der Erfindung lassen sich Fertigungstoleranzen, beispielsweise hervorgerufen durch Abstimmungstoleranzen der Schwingkreise, eliminieren. Desweiteren ist kein Quarz für die erste Einrichtung sowie auch kein "Abgrenzungswiderstand" nötig, was zu Kosteneinsparungen führt. Eine Steigerung der Funktionsfähigkeit für das Schließsystem ergibt sich daraus, daß dessen Diagnose, beispielsweise die Eigendiagnose, Antennendiagnose, Verkabelungsdiagnose o. dgl., ohne zusätzliche Beschaltung ermöglicht ist. Schließlich wird auch noch die Abhängigkeit des Betriebs für den Sender, insbesondere für die Weckfelder, von der Batteriespannung im Kraftfahrzeug weitgehend ausgeglichen.

Ein Ausführuagsbeispicl der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem im Kraftfahrzeug,
- Fig. 3: ein schematisches Blockschaltbild des ID-Gebers mit einem Diagramm zur Übertragung der Signale,
- Fig. 4: ein Schaltbild für die Schaltung zur Ermittlung des Ist-Wertes für den Betrieb des Senders,
- Fig. 5: schematisch das Kraftfahrzeug mit unterschiedlicher Intensitätsansteuerung der Sender zur Innenraumerkennung und
- Fig. 6: schematisch das Kraftfahrzeug mit maximaler Intensitätsansteuerung der Sender zur Außenraumerkennung.

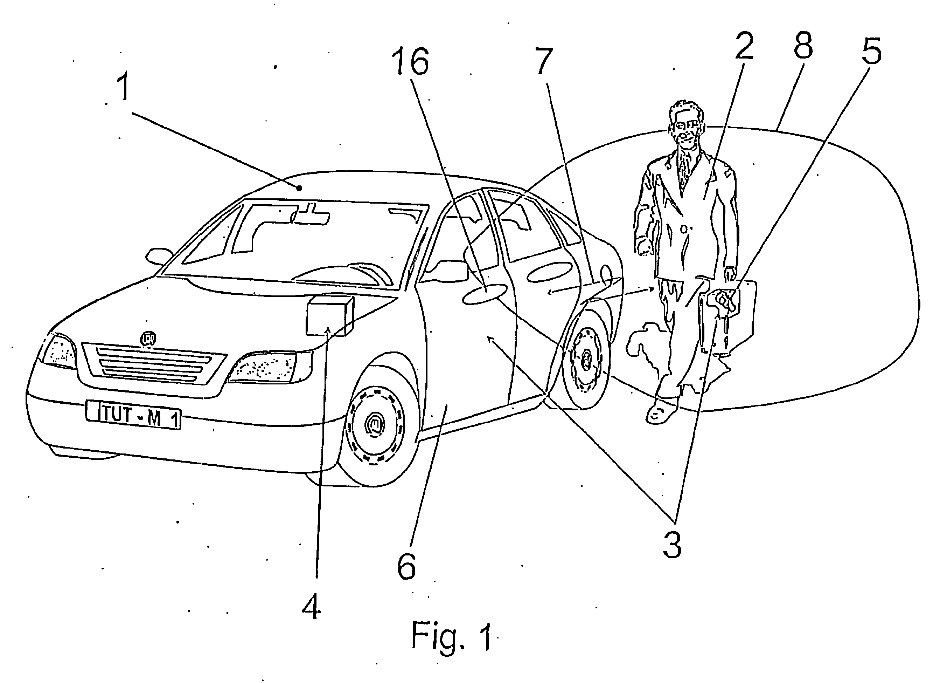

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

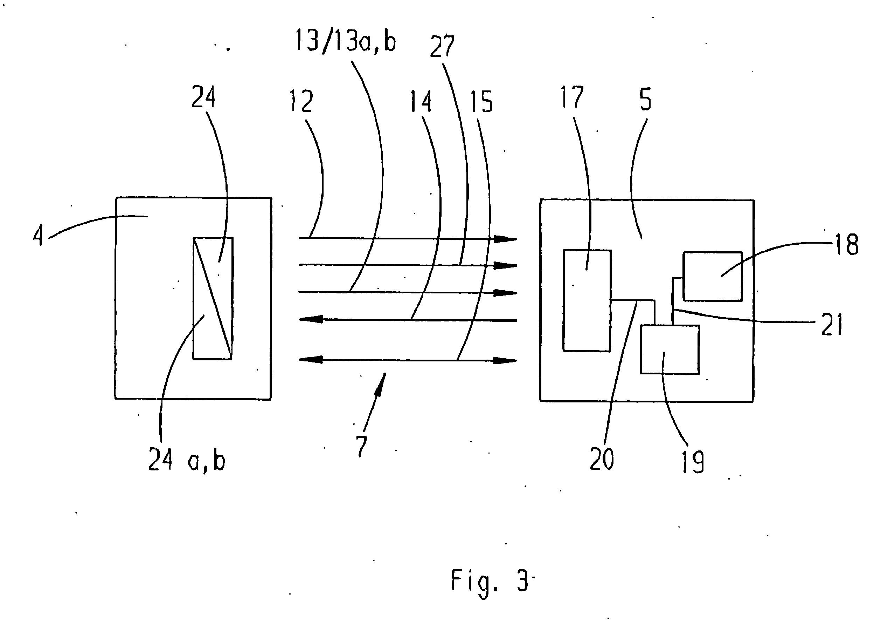

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

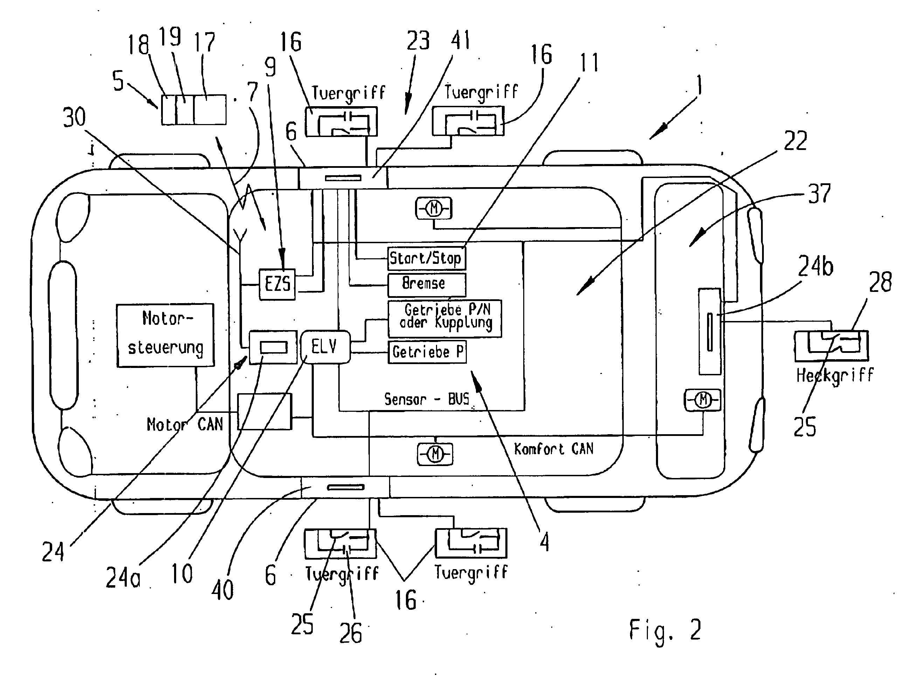

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloß EZS) und/oder der Lenkradverriegelung 10 (elektrische Lenkradverriegelung ELV), die in Fig. 2 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder Sensors vom Benutzer 2 ausgelöst. Für die Zugangsberechtigung kann es sich beispielsweise um die manuelle Betätigung des Türgiffs 16, Heckgriffs 28 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich ein vom Benutzer 2 manuell betätigbarer Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Dadurch wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Das Schließsystem 3 weist nun die Besonderheit auf, daß die Feldstärke und/oder die Leistung wenigstens eines Senders 24, 17 in wenigstens einer der beiden Einrichtungen 4, 5 auf einen vorgebbaren Soll-Wert geregelt ist. Insbesondere ist die Feldstärke des Senders 24 in der ersten Einrichtung 4 für das Wecksignal 12 und/oder für das Bereichsabgrenzungssignal 13 geregelt. Dadurch erzeugt der Sender 24 ein homogenes, gleichförmiges Feld, was vor allem in zeitlicher Hinsicht gilt. Fertigungstoleranzen bei der Herstellung des Schließsystems 3 sind somit ohne aufwendige Justierung beim Einbau des Schließsystems 3 in das Kraftfahrzeug 1 eliminiert. Desweiteren herrschen für die Funktion des Schließsystems 3 reproduzierbare Bedingungen, vor allem auch bei veränderlichen Umwelteinflüssen. Damit wird einem Fehlverhalten des Schließsystems 3 wirksam vorgebeugt.

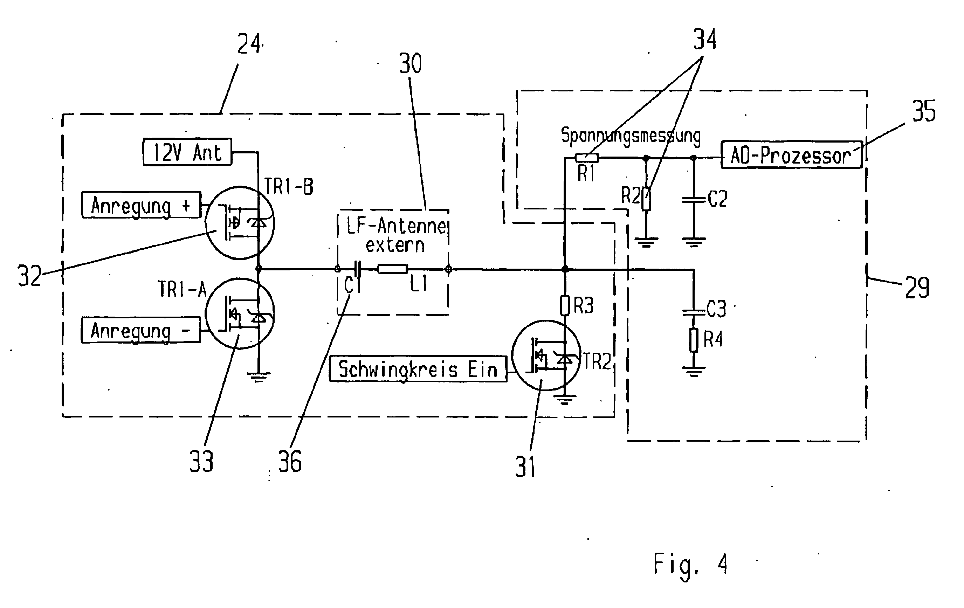

Eine Schaltung 29 zur Ermittlung des Ist-Wertes, mit dem der Sender 24, 17 betrieben wird, ist in Fig. 4 gezeigt. Der Sender 24 besitzt einen elektronischen Schalter 31 zum Ein- und Ausschalten des Schwingkreises für den Sender 24. Desweiteren sind im Sender 24 ein elektronischer Schalter 32 zur Anregung der positiven Halbwelle und ein elektronischer Schalter 33 zur Anregung der negativen Halbwelle für den Schwingkreis des Senders 24 angeordnet. Bei den elektronischen Schaltern 31, 32, 33 handelt es sich um Leistungstransistoren in der Art von MOSFETs. Die Schaltung 29 ermittelt den Ist-Wert für die Feldstärke und/oder Leistung des Senders 24 mittels einer Spannungsmessung an dessen eine Spule L1 und einen Kondensator Cl umfassenden Antenne 30.

Die auf die Ansteuer-Anregung bezogene Energie im Kondensator 36 der Antenne 30 bleibt bei phasenrichtigem Abschalten des seriellen Schwingkreises mittels des elektronischen Schalters 31 erhalten. Dieser Effekt kann bereits beim Erzeugen des Feldes für das Wccksignal 12 zur Steigerung der Leistung der Antenne 30 verwendet werden. Durch die zusätzliche Schaltung 29 kann die Spannung am Kondensator 36 gemessen werden, wobei diese Spannung ein Maß für die Leistung des elektromagnetischen Feldes ist, welches die Antenne 30 erzeugt. Hierzu befinden sich in der Schaltung 29 Widerstände 34, wobei der an diesen Widerstände 34 auftretende Spannungsabfall zur Spannung an der Antenne 30 korrespondiert. Aus dem Spannungsabfall an den Widerständen 34 ist dann mittels eines Analog-Digital-Wandlers 35 der entsprechende Ist-Wert für die Feldstärke des Senders 24 erzeugbar. Anstelle einer Ermittlung des Ist-Wertes mittels einer Spannungsmessung kann auch eine Strommessung, eine Phasenmessung o. dgl. im Schwingkreis des Senders 24 eingesetzt werden.

Der mittels des Analog-Digital-Wandlers 35 erzeugte Ist-Wert wird wiederum zur Regelung des Senders 24 auf den vorgegebenen Soll-Wert verwendet. Die eigentliche Regelung der Feldstärke und/oder Leistung des Senders 24 erfolgt über entsprechende Anregung der Antenne 30, indem die elektronischen Schalter 32, 33 dementsprechend angesteuert werden. Diese Ansteuerung erfolgt in einer ersten Ausgestaltung mittels einer Pulswcitenmodulation PWM. In einer weiteren Ausgestaltung erfolgt die Ansteuerung der Antennen-Anregung zur Regelung der Feldstärke und/oder der Leistung des Senders 24 durch Reduzierung der Antennenleistung mittels einer Veränderung der Ansteuerungsperiode um ein Vielfaches der Resonanzfrequenz. Als zweckmäßig hat sich dabei die Reduzierung mit einer Dauer der Ansteuerungsperiode um die 1- bis 5-fache Resonanzperiodendauer erwiesen. Hervorzuheben ist, daß neben der PWM-Regelung die weitere Reduzierung der Antennenleistung mittels der zusätzlichen Veränderung der Ansteuerungsperiode möglich ist.

Falls gewünscht, kann eine derartige Steuerung der Antenne 30 auch ohne vorherige Messung des Ist-Wertes erfolgen, so daß in einfacher Weise lediglich die Leistung des Senders 24 mittels PWM-Steuerung und/oder mittels Ausblenden von Ansteuer-Pulsen verändert wird. Damit kann durch Verändern der Anregungs-Ansteuerung das Feld des Senders 24 verstärkt oder geschwächt werden. Die Steuerung und/oder Regelung kann in einfacher Weise mittels Software und einer Capture/Compare Einheit im Microcontroller, der den Sender 24 steuert, realisiert werden. Schließlich kann in einer weiteren Ausgestaltung der Ist-Wert für die Feldstärke und/oder Leistung des Senders 24 mittels einer Strom- und Phasenmessung im Schwingkreis des Senders 24 gemessen werden und dann die Ansteuerfrequenz des angeschlossenen Schwingkreises auf Resonanz geändert werden.

Das Wccksignal 12 kann beispielswseise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentikation auf, so daß bei Vorhandensein beider Linien im Wirkbereich 8 lediglich eine Authentikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentikation zu gestatten.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke mißt die Feldstärke beziehungsweise die Intensität eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein.

Zur Standortbestimmung unter Verwendung des RSSI-Signals enthält die erste Einrichtung 4 wenigstens zwei Sender 24a, 24b mit zugehörigen Empfängern, wie in Fig. 2 zu sehen ist. Die zwei Sender 24a, 24b sind verschiedenen Bereichen des Kraftfahrzeugs 1 zugeordnet, und zwar befindet sich der Sender 24a im Innenraum 22 und der Sender 24b im Heckbereich 37 bzw. im Kofferraum des Kraftfahrzeugs 1. Die Betätigung des Türgriff 16, des Heckgriffs 28 oder des Start/Stop-Schalters 11 durch den Benutzer 2 löst eines der Signale der ersten Einrichtung 4 aus. Die beiden Sender 24a, 24b der ersten Einrichtung 4 senden dann nacheinander jeweils ein Bereichsabgrenzungssignal 13a, 13b, beispielsweise zunächst der Sender 24a und anschließend der Sender 24b, wie in Fig. 3 angedeutet ist. Diese beiden Bereichsabgrenzungssignale 13a, 13b werden dann vom Sender/Empfänger 17 der zweiten Einrichtung 5 empfangen und daraus entsprechende RSSI-Signale im RSS-Chip 19 gebildet. Diese am RSSI-Ausgang 21 anliegenden RSSI-Signale der von den beiden Sendern 24a, 24b empfangenen Signale 13a, 13b werden dann zur Standortbestimmung der zweiten Einrichtung 5 mit Hilfe des Mikroprozessors 18 verwendet.

Zur Standortbestimmung wird die Möglichkeit benutzt, die Bereichsabgrenzungsfelder durch Parameter vorzugeben sowie diese variabel parametrierbar durch mehrfache Ansteuerung der Antennen 24a, 24b zu verändern. Es genügt dann die Bildung von Schnittmengen anhand der gemessenen Intensitäten der Bereichsabgrenzungssignale 13a, 13b zur Bercichserkennung, wie nachfolgend näher erläutert wird.

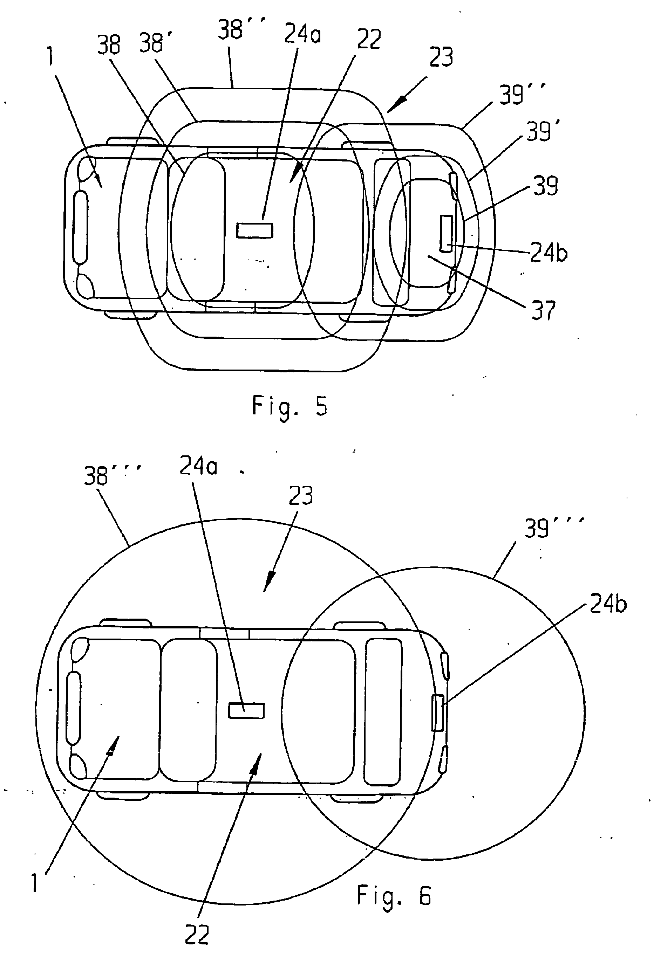

Wie in Fig. 5 zu sehen ist, wird die Innenraumantenne 24a nacheinander mit unterschiedlichen Intensitäten angesteuert, so daß die abgestrahlten Felder 38, 38', 38" für das Bereichsabgrenzungssignal 13a unterschiedlich stark und damit von unterschiedlicher Reichweite sind. In Fig. 5 sind die Bereiche mit einer Linie begrenzt, innerhalb der die zweite Einrichtung 5 das Feld 38, 38', 38" erkennt. Zur Erkennung wird ein Schwellwert S für das RSSI-Signal bestimmt und dann im Mikroprozessor 18 überprüft, ob das RSSI-Signal für das Feld 38, 38', 38" jeweils den Schwellwert S überschreitet. Ebenso wird die Kofferraumantenne 24b nacheinander mit unterschiedlichen Intensitäten angesteuert, so daß die abgestrahlten Felder 39,39', 39" für das Bereichsabgrenzungssignal 13b resultieren. Die zweite Einrichtung 5 überprüft auch hier mit Hilfe des Schwellwertes S, welche Felder 39, 39', 39" erkannt werden. Wie man nun sicht, kann die zweite Einrichtung 5 durch Bildung von Schnittmengen in einfacher Weise erkennen, ob sie sich im Innenraum 22 oder im Kofferraum 37 sowie gegebenenfalls an welcher Stelle dort befindet.

Ebenso können die Ortungsberciche für die Außenraumerkennung für den Fahrzeugzugang festgelegt sein, wie anhand von Fig. 6 gezeigt ist. Hier werden nun die Innenraumantenne 24a sowie die Kofferraumantenne 24b maximal angesteuert, so daß die maximalen Weckfelder 38"', 39"' resultieren. Die Erkennung, ob sich die zweite Einrichtung 5 im Außenraum 23 sowie gegebenenfalls an welcher Stelle dort befindet, kann wiederum durch Schnittmengenbildung unter Berücksichtigung des Empfangs bzw. Nichtempfangs für die Felder 38, 38', 38" sowie 39, 39', 39" erfolgen. Gegebenenfalls kann die erste Einrichtung 4 noch einen weiteren, beispielsweise der fahrerseitigen Tür 6 des Kraftfahrzeugs 1 zugeordneten induktiven Sender 40 oder der beifahrerseitigen Tür 6 zugeordneten Sender 41 besitzen, die in Fig. 2 zu sehen sind, um auch noch eine Seitenerkennung für das Kraftfahrzeug 1 zu ermöglichen.

Also ist zur Standortbestimmung ein Schwellwert S in der zweiten Einrichtung 5 festgelegt, derart daß die RSSI-Signale der Bercichsabgrenzungssignale 13a, 13b mit dem Schwellwert S verglichen werden. Desweiteren sind lediglich logische, nämlich boole'sche Verknüpfungen der Ergebnisse dieser Vergleiche notwendig, womit der Standort der zweiten Einrichtung 5 sich in einfacher Art und Weise bestimmen läßt. Insbesondere läßt sich somit zur Auslösung der jeweiligen KeylessEntry/Go-Funktionalität feststellen, ob die zweite Einrichtung 5 im Außenraum 23 oder im Innenraum 22 des Kraftfahrzeugs 1 befindlich ist

Besonders bevorzugt ist, daß die Trägerwelle für das erste Signal 12 als Wecksignal und/oder das dritte Signal 13 als Bereichsabgrenzungsignal beziehungsweise die Teilsignale 13a, 13b des dritten Signals 13 eine im induktiven (NF-)Bereich liegende Frequenz aufweist. Insbesondere kann diese Frequenz in etwa 20 kHz betragen. Vorteilhafterweise weist ein solches induktives Signal auch bei maximaler Ansteuerung des Senders 24a, 24b eine begrenzte Reichweite auf. Dadurch wird erreicht, daß die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. In diesem Fall können in einfacher Weise zum einen Spulen (man vergleiche Spule L1 in Fig. 4) als dem Innenraum 22 sowie dem Kofferraum 37 zugeordnete, induktive Sender 24a, 24b verwendet werden und zum anderen besitzt die zweite Einrichtung 5 einen induktiven Empfänger 17.

Die Erfindung ist nicht auf das beschriebene und dargestellte Ausführungsbeispiel beschränkt. Die Erfindung umfaßt weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Berugszcichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: (erstes) Signal / Wecksignal
- 13:: (drittes) Signal / Bereichsabgrenzungssignal
- 13a:: Tcilsignal (des dritten Signals von der Innenraumantenne)
- 13b:: Teilsignal (des dritten Signals von der Kofrerraumantenne)
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 24a:: Sender (im Innenraum) / Innenraumantenne
- 24b:: Sender (im Heckbereich) / Kofferraumantenne
- 25:: Schalter (im Türgriff / Heckgriff)
- 26:: (Näherungs)Sensor (im Türgriff)
- 27:: (zweites) Signal / Selektionssignal
- 28:: Heckgriff
- 29:: Schaltung (für Ermittlung Ist-Wert)
- 30:: Antenne
- 31,32,33:: elektronischer Schalter
- 34:: Widerstand (in Schaltung für Ermittlung Ist-Wert)
- 35:: Analog-Digital-Wandler
- 36:: Kondensator (in Antenne)
- 37:: Heckbereich / Kofferraum (von Kraftfahrzeug)
- 38,38',38":: Feld (von Innenraumantenne)
- 38''':: maximales Weckfeld (von Innenraumantenne)
- 39,39',39":: Feld (von Kofferraumantenne)
- 39''':: maximales Weckfeld (von Kofferraumantenne)
- 40,41:: Sender (in Autotüre)

## Patentansprüche

1. Schließsystem, für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent - und/oder Verriegelung der Autotüren (6), des Zündschlosses (9), der Lenkradverriegelung (10), zur Freigabe und/oder Sperrung der Wegfahrsperre, des Motorsteuergeräts, und mit einer zugehörigen, in der Art eines elektronischen Schlüssels, eines ID-Gebers, einer Chipkarte ausgebildeten zweiten Einrichtung (5), wobei die beiden Einrichtungen (4, 5) zu deren bestimmungsgemäßen Betrieb Sender und/oder Empfänger (24, 17) für elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentikation der zweiten Einrichtung (5) handelt, so daß nach positiver Auswertung des übertragenen Betriebssignals (15) bei berechtigter zweiter Einrichtung (5) eine Änderung des Zustandes der ersten Einrichtung (4) bewirkbar ist, wobei die erste Einrichtung (4) ein erstes Signal (12) für die zugehörige zweite Einrichtung (5) als Wecksignal sendet, derart daß die zweite Einrichtung (5) aus einem Ruhezustand mit verringertem Energiebedarf in einen aktivierten Zustand für den bestimmungsgemäßen Betrieb übergeführt wird, und wobei die erste Einrichtung (4) nach Aussenden des ersten Signals (12) wenigstens ein weiteres, drittes Signal (13) als Bereichsabgrenzungssignal sendet, derart daß die zugehörige zweite Einrichtung (5) deren Standort in Bezug auf die erste Einrichtung 4), am und/oder im Kraftfahrzeug (1), bestimmen kann, **dadurch gekennzeichnet, daß** die Feldstärke für das Wecksignal (12) und/oder für das Bereichsabgrenzungssignal (13) des Senders (24) in der ersten Einrichtung (4) auf je einen vorgebbaren Soll-Wert geregelt ist, derart daß der Sender (24) ein insbesondere zeitlich homogenes Feld erzeugt.

2. Schließsystem nach Anspruch 1, **dadurch gekennzeichnet, daß** der Ist-Wert für die Feldstärke des Senders (24) an der Antenne (30), insbesondere mittels einer Spannungsmessung, einer Strommessung, einer Phasenmessung o. dgl. im Schwingkreis des Senders (24), gemessen wird.

3. Schließsystem, insbesondere nach Anspruch 1 oder 2, **dadurch gekennzeichnet, daß** die Ansteuerung der Antennen-Anregung, insbesondere zur Regelung der Feldstärke des Senders (24), mittels Pulsweitenmodulation PWM erfolgt.

4. Schließsystem, insbesondere nach Anspruch 1, 2 oder 3, **dadurch gekennzeichnet, daß** die Ansteuerung der Antennen-Anregung, insbesondere zur Regelung der Feldstärke des Senders (24), durch Reduzierung der Antennenleistung mittels einer Veränderung der Ansteuerungsperiode um ein Vielfaches der Resonanzfrequenz, insbesondere mit einer Dauer der Ansteuerungsperiode von 1- bis 5-facher Resonanzperiodendauer, erfolgt.

5. Schließsystem nach einem der Ansprüche 1 bis 4, **dadurch gekennzeichnet, daß** der Ist-Wert für die Feldstärke des Senders (24) mittels einer Strom- und Phasenmessung im Schwingkreis des Senders (24) gemessen wird, und daß die Ansteuerfrequenz des angeschlossenen Schwingkreises auf Resonanz geändert wird.

6. Schließsystem nach einem der Ansprüche 1 bis 5, **dadurch gekennzeichnet, daß** die zweite Einrichtung (5) dem ersten Signal (12) und/oder dem dritten Signal (13) nachfolgend ein den Standort beinhaltendes weiteres, viertes Signal (14) zur ersten Einrichtung (4) sendet, daß vorzugsweise das codierte Betriebssignal (15) zur Authentikation der zweiten Einrichtung (5) als fünftes Signal (15) zwischen der zweiten Einrichtung (5) und der ersten Einrichtung (4) übertragen wird, wobei das der Authentikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und daß weiter vorzugsweise die erste Einrichtung (4) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart daß zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

7. Schließsystem nach einem der Ansprüche 1 bis 6, **dadurch gekennzeichnet daß** in der zweiten Einrichtung (5) ein Mittel (19) zur Messung der Feldstärke (F) des von der ersten Einrichtung (4) übertragenen Bereichsabgrenzungssignals (13, 13a, 13b) angeordnet ist, und daß vorzugsweise die Standortbestimmung anhand der gemessenen Intensitäten der Bereichsabgrenzungssignale (13, 13a, 13b) erfolgt.

8. Schließsystem nach einem der Ansprüche 1 bis 7, **dadurch gekennzeichnet, daß** das Mittel (19) zur Messung der Feldstärke (F), das insbesondere als integrierter Baustein ausgestaltet ist, ein in funktioneller Abhängigkeit, beispielsweise proportional oder logarithmisch, zur Feldstärke (F) stehendes RSSI(Radio Signal Strength Indicator)-Signal erzeugt, daß vorzugsweise das RSSI-Signal in der zweiten Einrichtung (5), insbesondere in einem Mikroprozessor (18), weiterverarbeitet wird, daß weiter vorzugsweise ein Schwellwert (S) in der zweiten Einrichtung (5) festgelegt ist, derart daß die RSSI-Signale der Bereichsabgrenzungssignale (13a, 13b) mit dem Schwellwert (S) verglichen sowie mittels logischer, insbesondere boolescher Verknüpfungen der Ergebnisse dieser Vergleiche der Standort bestimmt wird, und daß noch weiter vorzugsweise zur Standortbestimmung der Sender (24a, 24b) für das Bereichsabgrenzungssignal (13a, 13b) mit unterschiedlicher Leistung angesteuert wird.

9. Schließsystem nach einem der Ansprüche 1 bis 8, **dadurch gekennzeichnet, daß** die Trägerwelle für das erste Signal (12) und/oder das dritte Signal (13) und/oder Teilsignale (13a, b) des dritten Signals (13) eine im induktiven, niederfrequenten (NF) Bereich liegende Frequenz, die insbesondere in etwa 20 kHz beträgt, aufweist.

10. Schließsystem nach einem der Ansprüche 1 bis 9, **dadurch gekennzeichnet, daß** die erste Einrichtung (4) wenigstens zwei induktive Sender (24a, 24b) beziehungsweise als induktive Sender dienende Spulen besitzt, wobei insbesondere ein induktiver Sender (24a) dem Innenraum (22) sowie ein weiterer induktiver Sender (24b) dem Kofferraum (37) des Kraftfahrzeugs (1) zugeordnet sind, daß gegebenenfalls die erste Einrichtung (4) einen weiteren, der fahrerseitigen Autotüre (6) des Kraftfahrzeugs (1) zugeordneten induktiven Sender (40) beziehungsweise eine als induktiven Sender dienende Spule besitzt, und daß die zweite Einrichtung (5) einen induktiven Empfänger (17) besitzt.

11. Schließsystem nach einem der Ansprüche 1 bis 10, **dadurch gekennzeichnet, daß** im Türgriff (16), Heckgtiff (28) o. dgl. des Kraftfahrzeugs (1) ein durch den Benutzer (2) manuell betätigbarer Schalter (25) und/oder beispielsweise kapazitiv arbeitender Näherungssensor (26) zum Auslösen des Signals (7) für die Zugangsberechtigung zum Kraftfahrzeug (1) angeordnet ist.

12. Schließsystem nach einem der Ansprüche 1 bis 11, **dadurch gekennzeichnet, daß** am Gangwahlhebel, am Zündschloß (9), im Armaturenbrett, in der Mittelkonsole o. dgl. ein durch den Benutzer (2) manuell betätigbarer Start/Stop-Schalter (11) zum Auslösen des Signals (7) für die Fahrberechtigung des Kraftfahrzeugs (1) angeordnet ist.

## Claims

1. Locking system for access and/or driving authorization of a motor vehicle (1) in the manner of a keyless entry/go functionality, having a first unit (4) being embodied as a control unit and having at least two conditions, such as a control unit for unlocking and/or locking car doors (6), the ignition (9), the steering wheel lock (10), for releasing and/or locking the immobilizer system, the engine control unit (5), and having an associated second unit (5) being embodied in the manner of an electronic key, an ID sensor, a chip card, wherein both units (4, 5) have transmitters and/or receivers (24, 17) for electromagnetic signals (7) for their intended operation, wherein in particular at least one of the signals (7) transmitted between the second unit (5) and the first unit (4) is a coded operating signal (15) for the authentication of the second unit (5) such that after positive assessment of the transmitted operating signal (15), with an authorized second unit (5), a change of the condition of the first unit (4) may be effected, wherein the first unit (4) sends a first signal (12) for the associated second unit (5) as an alarm signal such that the second unit (5) is transferred from an idle state having a reduced energy demand, into an activated state for the intended operation, and wherein after sending the first signal (12), the first unit (4) sends at least one additional, third signal (13) as a range limiting signal such that the associated second unit (5) may determine its location at and/or within the motor vehicle (1) with regard to the first unit (4), **characterized in that** the field force for the alarm signal (12) and/or for the range limiting signal (13) of the transmitter (24) in the first unit (4) is controlled on one predetermined target value each, such that the transmitter (24) generates a particularly chronologically homogeneous field.

2. Locking system according to claim 1, **characterized in that** the current value for the field force of the transmitter (24) on the antenna (30) is measured in particular by means of a voltage measurement, a power measurement, a phase measurement, or the like, within the oscillating circuit of the transmitter (24).

3. Locking system according to claims 1 or 2, **characterized in that** the activation of the antenna excitement, in particular for controlling the field force of the transmitter (24), is carried out by means of pulse width modulation (PWM).

4. Locking system, in particular according to claim 1, 2 or 3, **characterized in that** the activation of the antenna excitement, in particular for controlling the field force of the transmitter (24), is carried out by means of reducing the antenna performance by means of a change of the activation period by a multitude of the resonance frequency, in particular at a duration of the activation duration from 1 to 5 times of the resonance duration.

5. Locking system according to one of the claims 1 to 4, **characterized in that** the current value for the field force of the transmitter (24) is measured by means of a power and phase measurement within the oscillating circuit of the transmitter (24), and the activation frequency of the connected oscillating circuit is changed to resonance.

6. Locking system according to one of the claims 1 to 5, **characterized in that** subsequent to the first signal (12) and/or the third signal (13) the second unit (5) sends a further, fourth signal (14) containing the location to the first unit (4), that preferably the coded operating signal (15) is transmitted as a fifth signal (15) between the second unit (5) and the first unit (4) for authenticating the second unit (5), wherein the fifth electromagnetic signal (15) serving for authentication is preferably transmitted in a bidirectional communication consisting of multiple partial signals between the first and the second units (4, 5), and that further between the first and the third signal (12, 13), the first unit (4) preferably sends a second signal (27) to the second unit (5) as a selection signal, wherein in particular the second signal (27) contains information on the identity of the motor vehicle (1), such that second units (5) associated with the first unit (4) remain in an activated state, and any non-associated units being in the activated state are returned to the idle state.

7. Locking system according to one of the claims 1 to 6, **characterized in that** a means (19) for measuring the field force (F) of the range limiting signal (13, 13a, 13b) transmitted by the first unit (4) is disposed in the second unit (5), and that preferably the determination of the location is carried out by means of the intensities of the range limiting signals (13, 13a, 13b) measured.

8. Locking system according to one of the claims 1 to 7, **characterized in that** the means (19) for measuring the field force (F), which is embodied in particular as an integrated module, generates an RSSI (radio signal strength indicator) signal as a function of the field force (F), for example, proportional or logarithmically, that preferably the RSSI signal is further processed in the second unit (5), in particular in a microprocessor (18), that further a threshold value (S) is preferably defined in the second unit (5), such that the RSSI signals of the range limiting signals (13a, 13b) are compared to the threshold value (S), and that the location is determined by means of logical, in particular Boole links of the results of these comparisons, and that furthermore for the determination of the location the transmitter (24a, 24b) for the range limiting signal (13a, 13b) is preferably activated at varying power levels.

9. Locking system according to one of the claims 1 to 8, **characterized in that** the carrier wave for the first signal (12) and/or for the third signal (13) and/or the partial signals (13a, b) of the third signal (13) has a frequency within the inductive, low-frequency (NF) range, which is in particular about 20 kHz.

10. Locking system according to one of the claims 1 to 9, **characterized in that** the first unit (4) has at least two inductive transmitters (24a, 24b), or rather inductors serving as inductive transmitters, wherein in particular one inductive transmitter (24a) is assigned to the interior (22), and another inductive transmitter (24b) is assigned to the trunk (37) of the motor vehicle (1), that optionally the first unit (4) has an additional inductive transmitter (40), or rather an inductor serving as an inductive transmitter that is assigned to the driver's side vehicle door (6) of the motor vehicle (1), and that the second unit (5) has an inductive receiver (17).

11. Locking system according to one of the claims 1 to 10, **characterized in that** a switch (25) to be manually operated by the user (2), and/or a proximity sensor (26), for example, operating in a capacitive manner, are disposed in the door handle (16), trunk handle (28), or the like, of the motor vehicle (1) for triggering the signal (7) for the access authorization to the motor vehicle (1).

12. Locking system according to one of the claims 1 to 11, **characterized in that** a start/stop switch (11) to be manually operated by the user (2) is disposed at the gear selection lever, at the ignition (9), in the dashboard, in the center console, or the like, for triggering the signal (7) for the driving authorization of the motor vehicle (1).

## Revendications

1. Système de fermeture pour l'autorisation d'accès et/ou de conduite sur un véhicule automobile (1) du type d'une fonction d'entrée/démarrage sans clé, comprenant un premier dispositif (4) réalisé en tant que dispositif de commande et possédant au moins deux états, comme un dispositif de commande permettant le verrouillage et/ou le déverrouillage des portières (6) de la voiture, de la serrure de contact (9) et du verrouillage du volant (10) afin de relâcher et/ou de bloquer le blocage d'anti-démarrage et du dispositif de commande du moteur, et comprenant un deuxième dispositif (5) correspondant réalisé à la manière d'une clé électronique, d'un fournisseur d'ID ou d'une carte à puce, dans lequel les deux dispositifs (4, 5) possèdent un émetteur et/ou un récepteur (24, 17) de signaux électromagnétiques (7) en vue de leur fonctionnement conforme à leur destination, dans lequel en particulier au moins l'un des signaux (7) transmis entre le deuxième dispositif (5) et le premier dispositif (4) est un signal de fonctionnement codé destiné à l'authentification du deuxième dispositif (5) de telle sorte qu'après une analyse positive du signal de fonctionnement (15) transmis, si le deuxième dispositif (5) est autorisé, une modification de l'état du premier dispositif (4) peut être réalisée, dans lequel le premier dispositif (4) émet un premier signal (12) en tant que signal d'appel pour le deuxième dispositif (5) correspondant de telle sorte que le deuxième dispositif (5) passe d'un état de veille à consommation d'énergie réduite à un état activé pour le fonctionnement conforme à la destination, et dans lequel le premier dispositif (4), après l'émission du premier signal (12), émet au moins un troisième signal (13) supplémentaire en tant que signal de délimitation de zone de telle sorte que le deuxième dispositif (5) correspondant peut déterminer sa position par rapport au premier dispositif (4), à proximité et/ou à l'intérieur du véhicule (1), **caractérisé en ce que** l'intensité de champ pour le signal d'appel (12) et/ou pour le signal de délimitation de zone (13) de l'émetteur (24) est réglée dans le premier dispositif (4) à une valeur de consigne respective pouvant être prédéfinie de telle sorte que l'émetteur (24) produit un champ homogène en particulier dans le temps.

2. Système de fermeture selon la revendication 1, **caractérisé en ce que** la valeur effective de l'intensité de champ de l'émetteur (24) est mesurée au niveau de l'antenne (30), en particulier au moyen d'une mesure des tensions, d'une mesure du courant, d'une mesure des phases ou d'une mesure similaire dans le circuit oscillant de l'émetteur (24).

3. Système de fermeture, en particulier selon la revendication 1 ou 2, **caractérisé en ce que** l'adressage de l'excitation de l'antenne, en particulier pour le réglage de l'intensité de champ de l'émetteur (24), est effectué au moyen d'une modulation d'impulsions en durée (MID).

4. Système de fermeture, en particulier selon la revendication 1, 2 ou 3, **caractérisé en ce que** l'adressage de l'excitation de l'antenne, en particulier pour le réglage de l'intensité de champ de l'émetteur (24), est effectué au moyen d'une réduction de la puissance de l'antenne par le biais d'une modification de la période d'adressage d'un multiple de la fréquence de résonance, en particulier avec une durée de la période d'adressage de 1 à 5 fois la durée de la période de résonance.

5. Système de fermeture selon l'une des revendications 1 à 4, **caractérisé en ce que** la valeur effective de l'intensité de champ de l'émetteur (24) est mesurée au moyen d'une mesure du courant ou des phases dans le circuit oscillant de l'émetteur (24) et **en ce que** la fréquence d'adressage du circuit oscillant raccordé est modifiée à la résonance.

6. Système de fermeture selon l'une des revendications 1 à 5, **caractérisé en ce que** le deuxième dispositif (5) envoie au premier dispositif (4), à la suite du premier signal (12) et/ou du troisième signal (13), un quatrième signal (14) supplémentaire contenant la localisation, **en ce que** le signal de fonctionnement codé (15) destiné à l'authentification du deuxième dispositif (5) est de préférence transmis en tant que cinquième signal (15) entre le deuxième dispositif (5) et le premier dispositif (4), le cinquième signal électromagnétique (15) servant à l'authentification étant de préférence transmis dans une communication bidirectionnelle constituée de plusieurs signaux partiels entre les premier et deuxième dispositifs (4, 5), et **en ce que** de façon plus préférée, le premier dispositif (4) envoie un deuxième signal (27) au deuxième dispositif (5) en tant que signal de sélection entre les premier et troisième signaux (12, 13), le deuxième signal (27) contenant en particulier une information sur l'identité du véhicule (1) de telle sorte que les deuxièmes dispositifs (5) correspondant au premier dispositif (4) restent à l'état activé et que les deuxièmes dispositifs n'y correspondant pas se trouvant à l'état activé sont ramenés à l'état de veille.

7. Système de fermeture selon l'une des revendications 1 à 6, **caractérisé en ce qu'**un moyen (19) destiné à mesurer l'intensité de champ (F) du signal de délimitation de zone (13, 13a, 13b) transmis par le premier dispositif (4) est agencé dans le deuxième dispositif (5) et **en ce que** la détermination de la localisation est de préférence réalisée sur la base des intensités mesurées des signaux de délimitation de zone (13, 13a, 13b).

8. Système de fermeture selon l'une des revendications 1 à 7, **caractérisé en ce que** le moyen (19) destiné à mesurer l'intensité de champ (F), qui est en particulier réalisé en tant que composant intégré, produit un signal RSSI (Radio Signal Strength Indicator) dans une relation de dépendance fonctionnelle, par exemple proportionnelle ou logarithmique, par rapport à l'intensité de champ (F), **en ce que** le signal RSSI est de préférence ensuite traité dans le deuxième dispositif (5), en particulier dans un microprocesseur (18), **en ce que** de façon plus préférée, une valeur de seuil (S) est définie dans le deuxième dispositif (5) de telle sorte que les signaux RSSI des signaux de délimitation de zone (13a, 13b) sont comparés avec la valeur de seuil (S) et que la localisation est déterminée au moyen de liaisons logiques, en particulier booléennes, des résultats de ces comparaisons, et **en ce que** de façon encore plus préférée, en vue de la détermination de la localisation l'émetteur (24a, 24b) pour le signal de délimitation de zone (13a, 13b) est adressé à différentes puissances.

9. Système de fermeture selon l'une des revendications 1 à 8, **caractérisé en ce que** l'onde porteuse pour le premier signal (12) et/ou le troisième signal (13) et/ou les signaux partiels (13a, b) du troisième signal (13) présente une fréquence située dans une gamme de basse fréquence (BF) à induction, qui s'élève en particulier à environ 20 kHz.

10. Système de fermeture selon l'une des revendications 1 à 9, **caractérisé en ce que** le premier dispositif (4) comprend deux émetteurs inductifs (24a, 24b) ou bobines faisant fonction d'émetteurs inductifs, dans lequel en particulier, un émetteur inductif (24a) est affecté à l'habitacle (22) et un autre émetteur inductif (24b) est affecté au coffre (37) du véhicule (1), **en ce que** le cas échéant, le premier dispositif (4) comprend un émetteur inductif (40) supplémentaire ou une bobine faisant fonction d'émetteur inductif supplémentaire qui est affecté aux portières (6) du véhicule (1) situées du côté du conducteur, et **en ce que** le deuxième dispositif (5) comprend un récepteur inductif (17).

11. Système de fermeture selon l'une des revendications 1 à 10, **caractérisé en ce qu'**un commutateur (25) pouvant être actionné manuellement par l'utilisateur (2) et/ou un capteur d'approche (26) à fonctionnement capacitif, par exemple, est agencé dans la poignée (16) de la portière, dans la poignée (28) du coffre ou à un endroit similaire du véhicule (1) afin de déclencher le signal (7) relatif à l'autorisation d'accès au véhicule (1).

12. Système de fermeture selon l'une des revendications 1 à 11, **caractérisé en ce qu'**un commutateur marche/arrêt (11) pouvant être actionné manuellement par l'utilisateur (2) est agencé sur le levier de changement de vitesse, dans la serrure de contact (9), dans le tableau de bord, dans la console centrale ou à un endroit similaire afin de déclencher le signal (7) relatif à l'autorisation de conduite du véhicule (1).
